# EUROPEAN PATENT APPLICATION

(11) **EP 4 574 348 A1**
(43) Date of publication of application: **25.06.2025**
(21) Application number: 24217802.8
(22) Date of filing: 05.12.2024
(51) Int. Cl.: B25J 9/16

(54) **PROCESS FOR REPOSITIONING A GROUP OF OBJECTS ARRANGED IN BULK ON A STAND**

(30) Priority: 22.12.2023 IT 202300027948
(71) Applicant: Vibrotech S.r.l., 56031 Bientina (PI) (IT)
(72) Inventor: TROTTA, Giuseppe, CASTELVECCHIO DI COMPITO-CAPANNORI (IT); SERENA, Sergio, Pontedera (IT)
(74) Representative: Lunati & Mazzoni S.r.L.

(57) **Abstract**

A process for repositioning a group of objects arranged in bulk on a stand is provided, implemented by computer and comprising a repositioning system (1) including a plurality of objects (10) each one defining a shape and/or gripping surface and/or a material in such a manner as to determine one or more stable gripping zones (10a) on the object (10), a support (2) developing along a support plane (2a) on which the objects (10) are distributed in bulk, moving means (3) configured to move, on command, the support (2) along at least one moving axis (3a) parallel to the support plane (2a), acquisition means (4) configured to acquire, on command, an at least two-dimensional image (40) of the objects (10) on the support (2) in such a way that templates (41) of the objects (10) are identified, visible by the acquisition means (4) on the support plane (2a), including gripping portions (41a) corresponding to the gripping zones (10a), a computer (5) configured to exchange data with the acquisition means (4) and the moving means (3) in such a way as to be able to control them; and further comprising acquiring the image (40); and distributing the objects (10) by determining through the computer (5) for at least a template (41) interfering with at least another template (41) a displacement segment (4a) along which the template (41) is to be moved parallelly to the support plane (2a) to bring the template (41) from an initial interference position to a final non-interference position in which the gripping portions (41a) of the template (41) result to be spaced with respect to the other template (41) by a predetermined distance, and by controlling the alignment of the moving axis (3a) with the displacement segment (4a) and the motion of the support (2) along the moving axis (3a) to displace the object (10) along the moving axis (3a) by a distance equal to the displacement segment (4a) in such a way that the relative template (41) goes from the initial position to the final position.

## Description

The present invention relates to a process for repositioning a group of objects arranged in bulk on a stand of the type specified in the preamble of first claim.

In particular, the present invention relates to a controlled repositioning process suitable to make a group of objects to be distributed on a support in a favourable manner for the subsequent pick-up by robotized picking means.

As it is known, within the modern industries in which the process for assembling the components by assembly line is widespread, there are robotized devices configured to pick up one or more objects from a transportation system in such a way as to allow the subsequent coupling thereof with other components.

The components, then, can be transported to the robot above a support on which they are poured chaotically and they reach the picking device substantially mutually overlapped at least partially.

The overlapping of the components, then, involves the need for the pick-up robot to distinguish and detect the components with respect to the group in such a way as to be able to pick up them in an isolated way.

In order to guarantee this function, three-dimensional viewing systems have been implemented on the picking devices capable of performing a scan of the three-dimensional image of the objects on the support in such a way as to allow the robot to detect the most favourable trajectories for extracting the objects.

An example of such artificial vision system implementable on pick-up robots of *pick and place* type is present on the market with the name *Keyence*^{™} *Series CV-X.* The described known art comprises some important disadvantages.

In particular, the detection of the extraction trajectories can be completed for visible objects only and only when the objects are not stuck inside a group of other objects. Therefore, it can be not possible to use effectively and quickly the artificial vision technology only.

In particular, it may be necessary to resort to unravel the group of objects in such a way as to unravel all objects and to make them capable to be picked-up. To this purpose, usually, the support can be shaken manually or through the help of tools suitable to impart a vibratory motion on the support which causes a motion of the objects so as to distribute them at the same level, when possible, on the support itself.

However, this procedure is not effective and surely involves to lengthen the periods of time required for the correct pick-up of the objects. Moreover, in such cases, it may be necessary to carry out shaking several times before obtaining satisfying results or it can even be not possible to unravel the group of objects in very short time.

It is highlighted that such above-mentioned drawbacks are present in any situation in which one or more objects has to be picked from a collection point in which such objects are piled up chaotically by creating piles in which the arrangement of the objects is random and then extremely variable depending upon extremely variable factors, such as for example shape of the objects, and often impossible to be controlled such as the conditions for releasing the objects on the collection point. In this situation the technical task underlying the present invention is to devise a process for repositioning a group of objects arranged in bulk on a stand capable of obviating substantially at least part of the mentioned drawbacks.

Within said technical task an important object of the invention is to obtain a process for repositioning a group of objects arranged in bulk on a stand allowing to increase the rapidity of picking up an object of the group through a picking device.

Another important object of the invention is to implement a process for repositioning a group of objects arranged in bulk on a stand which is highly performing and reduces the number of actions and then the time required to complete the procedure.

The technical task and the specified objects are achieved by a process for repositioning a group of objects arranged in bulk on a stand as claimed in the enclosed claim 1.

Preferred technical solutions are highlighted in the depending claims.

The features and the advantages of the invention are explained hereinafter by the detailed description of preferred embodiments of the invention, with reference to the enclosed drawings, wherein:

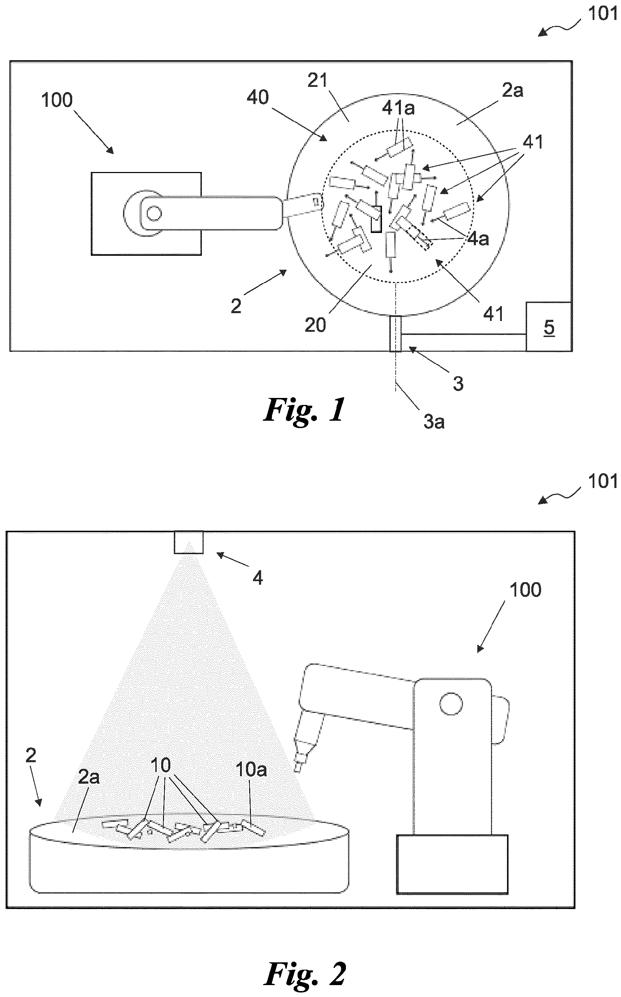

**Figure 1** illustrates a top view of an apparatus for picking-up objects to implement a process for repositioning a group of objects arranged in bulk on a stand according to the invention in which the objects are represented as templates of an acquired image; and
**Figure 2** is a side view of the picking device of Figure 1 in which the objects are represented as physical objects.

In the present document, the measurements, values, shapes and geometrical references (such as perpendicularity and parallelism), when associated to words such as "about" or other similar terms such as "approximately" or "substantially", are to be meant as excluding measurement errors or inaccuracies due to production and/or manufacturing errors and, above all, excluding a slight deviation from the value, measurement, shape or geometrical reference thereto it is associated. For example, such terms, if associated to a value, preferably designate a deviation not higher than 10% of the value itself.

Moreover, when used, terms such as "first", "second", "higher", "lower", "main" and "secondary" do not identify necessarily an order, a relation priority or relative position, but they can be simply used to distinguish more clearly components different from each other.

Unless otherwise specified, as it results from the following discussions, it is considered that terms such as "treatment", "computer science", "determination", "calculation", or the like, relate to the action and/or processes of a computer or similar electronic calculation device which manipulates and/or transforms data represented as physical data, such as electronic quantities of registers of a computer system and/or memories into other data similarly represented as physical quantities within computer systems, registers or other devices for storing, transmitting or displaying information.

The measurements and data reported in the present text are to be considered, unless otherwise indicated, as performed under International Standard Atmosphere ICAO (ISO 2533:1975).

With reference to Figures, a process for repositioning a group of objects arranged in bulk on a stand according to the invention is suitable to be implemented by a repositioning system indicated as a whole with number **1.**

The system 1 is suitable to reposition objects **10.** Therefore, the system 1 comprises, at least, a plurality of objects 10. The objects 10 can be of various kind, for example mechanical components or medical components, for example syringes, or still other objects such as caps or bottles. Generally, each one of the objects 10 defines a (suitably three-dimensional) shape and/or a gripping surface and/or a material.

The shape is given by the nature of the object 10 which, if for example consists of a syringe, comprises an almost cylindrical body thereto a needle is constrained axially. Moreover, connected to, or independently from, the shape, a gripping surface of the object 10 can be defined. The gripping surface, in case of the syringe, can correspond to the lateral surface of the cylindrical body.

The material too can have an impact on the modes for gripping the object 10. Generally, then, shape and/or gripping surface and/or material determine one or more gripping zones **10a.** In particular, the shape can comprise one or more gripping zones 10a.

The gripping zones 10a are part of the object 10 suitable for stably gripping by a picking device **100.** Therefore, the gripping zones 10a are determined both by the features of the object 10 and by the features of the picking device 100.

For example, if the picking device 100 comprises pliers, the gripping zones 10a detected on the object 10 are preferably two and arranged specularly.

If the object 10 comprises ferromagnetic material and the picking device 100 comprises a magnet, which can be actuated on command, suitable to attract the object 10, the gripping zone 10a can also be extended on the whole object. Generally, the picking device 100 includes a robot comprising at least one movable picking end. The latter is configured to interact with one or more gripping zones 10a of the object 10. Then, the system 1 and the picking device 100 together allow to implement an apparatus **101** for picking up objects.

The apparatus 101 then comprises both the system 1 and the picking device 100 interacting with each other.

The system 1, of course, comprises means for implementing the process according to the invention and as better described later.

In particular, the system 1 comprises at least a support **2.**

The support 2 develops preferably along a support plane **2a.** The support plane 2a is a virtual geometrical plane along which the support 2 defines a loading surface on which the objects 10 can be deposited firmly.

Therefore, the objects 10 are distributed in bulk on the support 2. Considering that they are, indeed, distributed in bulk, the objects 10 are at least partially mutually overlapping and can find on different levels, that is at different distances with respect to the loading surface, in case resting on other objects 10 and suspended with respect to the support 2.

It is specified that "in bulk" designates a random/chaotic arrangement. Therefore, the objects 10 are arranged on the plane 2a without any order and distinction, in a confused, disorganized and random way.

The support 2, then, can include, or consist of, a tray. The latter can be defined by the loading surface only, for example formed by a plate, developing along the support plane 2a or even by a loading surface surrounding by a border.

The support 2, moreover, can define even zones distinct from each other. For example, the support 2 can define at least one accumulation zone **20** and at least a pick-up zone **21.**

Therefore, the support 2 can have different discrete zones serving for different purposes.

The accumulation zone 20 is the support zone 2 and thus the portion of support plane 2a in which, preferably, the objects 10 are arranged in bulk and, then, are disorganized. The pick-up zone 21 is preferably a zone of the support 2 in which the objects 10 are distributed neatly and thus ready to be picked up. Then, in the case in which the support 2 defines the pick-up zone 21, it is the destination zone of the objects 10 which are subjected to the process according to the invention.

For example, a possible arrangement of the zones 20, 21 can be given by a central zone of the support 2 which defines the accumulation zone 20 and by a peripheral zone, surrounding the accumulation zone 20, which defines the pick-up zone 21. Of course, accumulation zone 20 and pick-up zone 21 could be defined not so much physically on the support 2, but depending upon the positions assumed by the objects 10 once performed the process, as better explained hereinafter.

Or, still, the zones 20, 21 could be virtually distinct parts of a support 2, then in one single piece, or they could be even physically distinct or separated from each other. Moreover, the support 2 could also be further discretized, for example comprising a plurality of accumulation zones 20 which can be easily manipulated individually. Such zones 20 can be then manipulated independently from each other.

In fact, the system 1, preferably, also comprises moving means **3.**

The moving means 3 is configured to move the support 2. In particular, the moving means 3 is suitable to move the support 2 on command. Under the term command it is meant that the means, both the moving means 3 or other means, is actuated based on stresses given by a control device, as better illustrated later.

Then, the moving means 3 is configured to move the support 2 along a moving axis **3a.** Preferably the moving axis 3a is parallel to the support plane 2a. Of course, when it is described that the motion occurs along the moving axis 3a it is not excluded that it could occur even along other directions. In fact, it is not necessary that the moving means 3 stress the support 2 only along the moving axis 3a, but it is sufficient that they do it (for example they can stress the support 2 with a force having a component along the axis 3a and in some cases having also a supplementary component perpendicularly to said axis 3a).

Examples of moving means 3 can be given by mechatronic devices such as, for example, linear actuators, vibrators or still other.

The motion is preferably of vibratory type and then periodic and bidirectional along the moving axis 3a.

Moreover, the moving means 3 is configured to vary, on command, the orientation of the moving axis 3a with respect to the support 2. Alternatively, or additionally, the moving means 3 can be suitable to move the support 2 along different moving axes 3a.

Additionally, advantageously, if the support 2 is discretized and comprises at least one accumulation zone 20 and at least one pick-up zone 21 the means 3 can be configured to move the at least one accumulation zone 20 and leaving the at least one pick-up zone 21 preferably stationary.

In particular, in case the support 2 provides several accumulation zones 20 mutually distinct and physically separated and at least one pick-up zone 21 the moving means 3 can be configured to move the accumulation zones 20 and leaving the at least one pick-up zone 21 preferably stationary. In this case the means 3 can move the accumulation zones 20 together and at the same time; alternatively, the moving means 3 can move the accumulation zones 20 in diversified way (for example by moving one zone 20 only).

The system 1, moreover, also comprises acquisition means **4.**

The acquisition means 4 is configured to acquire, preferably on command too, an image **40.** The image 40 is substantially the representation of the objects 10 on the support 2.

Therefore, the acquisition means 4 is preferably of optical type. For example, the acquisition means 4 can comprise at least a camera.

Moreover, the image 40 is preferably, but not necessarily, of digital type. Additionally, the image 40 is at least two-dimensional. This means that the image 40 can be implemented as a two-dimensional photo of the objects 10 on the support 2.

In this sense, the acquisition means 4 for example can face the support plane 2a so that the images 40 are detected parallelly to the support plane 2a. In other words, the acquisition means 4 can include a camera arranged above the support 2 and focusing on the objects 10 arranged in bulk, then at least the accumulation zone 20. Differently, the acquisition means 4 can also acquire three-dimensional images 40. On this regard, the acquisition means 4 can include scanner or even a plurality of cameras suitable to acquire two-dimensional images from different points of view through which the three-dimensional image 40 of the objects 10 is to be reconstructed.

In summary, the acquisition means 4 can acquire a two-dimensional or three-dimensional, and preferably two-dimensional, image 40 of the objects 10.

In each case, by acquiring the image 40, also the templates **41** of the objects 10 are detected.

The template 41 is substantially determined depending upon the line or peripheral surface of the portion (in some cases of the totality) of the object 10 which can be detected through the image 40. Therefore, the template 41 is at least two-dimensional, but it could be also three-dimensional. In the example in which the images 40 are two-dimensional and the acquisition means 4 faces the support plane 2a, the templates 41 are defined through the acquisition means 4 at least as projections on the support plane 2a of the visible objects 10.

Of course, the templates 41 which can be detected on the image 40 of the objects 10 belong to the (suitably at least partially) visible objects 10 through the acquisition means 4 on the support plane 2a. Possible objects 10 (suitably integrally) hidden by other objects 10 are not always detectable, at least until a repositioning has been performed.

In any case, analogously to the gripping zones 10a of the object 10, each template 41 includes gripping portions **41a.**

The gripping portions 41a correspond to the gripping zones 10a. Therefore, the gripping portions 41a substantially represent the gripping zones 10a on the image 40.

The system 1 also comprises a computer **5.**

As said previously, the computer 5 is suitable to generate the stresses allowing the means of the system 1 to operate. Therefore, the computer 5 is operatively to the acquisition means 4 and to the moving means 3.

Moreover, the computer 5 is preferably configured to exchange data with the acquisition means 4 and the moving means 3.

For example, the computer 5 can exchange input data with the moving means 3 in order to actuate them and control the orientation and the amount of motion along the moving axis 3a.

Moreover, the computer 5 can actuate the acquisition means 4 and process the images 40 acquired by the same.

In fact, the computer 5 exchanges data with the acquisition means 4 and the moving means 3 in order to be able to control them.

For each one of the objects 10 the computer 5 can comprise at least the shape of the object 10 and preferably one or more gripping zones 10a of the object 10. Additionally, it can comprise for each object 10 the material of said object 10.

Of course, since the computer 5 is substantially the brain of the system 1, it preferably comprises at least a computer or digital processing tool.

Then, the computer 5 can comprise a new computer program.

The computer 5, on this regard, can implement a neural network. The neural network can be defined by the computer program according to the invention as mentioned previously.

The invention, in fact, also comprises a computer program comprising instructions which, when the programme is executed by the computer, that is the computer 5, allow the computer to execute the process according to the invention.

Moreover, the computer 5 can comprise a new storage medium.

The invention, in addition, comprises a storage medium which can be read by a computer comprising instructions which, when executed by the computer, that is the computer 5, allow the computer to execute the process according to the invention. The process for repositioning a group of objects arranged in bulk on a stand according to the invention is implemented by a computer. Still more in detail, preferably, the process is implemented by a computer present in the computer 5 and as a whole by the system 1.

The process comprises a step for randomly placing the objects 10 on the support 2 and in particular in one or more loading zones 20. The objects 10 are placed on the support 2 chaotically by defining a pile of objects.

The process comprises, in brief, at least an acquisition step.

In the acquisition step, preferably at least an image 40 is acquired by the acquisition means 4. Said image comprises said objects 10 and precisely said pile of objects 10.

Then, the process comprises an analysis step. In the analysis step the position of one or more objects 10 is identified in the pile.

The analysis step, moreover, comprises at least an identification sub-step, at least a determination sub-step.

Both the identification sub-step, the determination sub-step and the control sub-step are performed by the computer 5.

In the identification sub-step one or more templates 41 are identified in the image 40 and then in the pile of objects. In particular, for each object at least partially visible in the image 10 the identification of the shape (in particular of at least a shape portion) and preferably of the orientation/position of said object 10 in the pile is performed. Consequently, each object 10 of the pile is identified having at least one portion visible in the image; and for each one of them the orientation is identified suitably with respect to the other identified objects.

In the determination sub-step, advantageously, according to the described above identification for at least a template 41 interfering with at least another template 41 a displacement segment **4a** is determined.

The displacement segment 4a is a linear moving path having a finished length. The displacement segment 4a, advantageously, is the path along which the template 41 has to be moved parallelly to the support plane 2a to bring the template 41 from an initial position to a final position.

The initial position is an interference position between the templates 41 in which, for example, the templates 41 and then also the objects 10 are at least partially overlapped and/or in contact and would involve impediment for the picking device 100. In initial position one or more gripping portions 41a of a template 41 and then gripping zones 10a of an object 10 cannot be accessed by the picking device 100 and then they cannot be moved.

The final position, instead, is a non-interference position between the templates 41. Additionally, the final position is advantageously determined as a position in which at least part and in detail the totality of one or more gripping portions 41a of the template 41 to be moved or stationary can be accessed by the picking device 100 since they result to be not in contact with any other template 41 and suitably spaced apart with respect to the other template 41 by a predetermined distance. Preferably the whole template 41 is not in contact with any other template 41.

In this way, it is guaranteed that the picking device 100 could intervene without colliding with the objects 10, for example, in order to pick one thereof.

Then, the process comprises at least a distribution step. In the distribution step, at least part of the objects 10 is distributed neatly.

In the distribution step, the moving means 3 is controlled to align the moving axis 3a with the displacement segment 4a.

Then, in the distribution step it is also commanded to the moving means 3 to move the support 2 along the moving axis 3a, for example with a vibratory motion, in order to displace the object 10 along the moving axis 3a. In particular, the displacement of the object 10 is implemented by a distance equal to the displacement segment 4a in such a way that the relative template 41 goes from the initial position to the final position.

Of course, if the support 2 comprises accumulation zones 20 and pick-up zones 21, the accumulation zone 20 preferably includes objects 10 arranged on the support 2 in bulk in the initial position, whereas the pick-up zone 21 includes one or more objects 10 in final position. Preferably only the accumulation zone 20 is moved by the means 3 bringing at least an object 10 in the pick-up zone 21 in final position. Then, the process comprises an adjustment step suitably in parallel to the distribution step.

The adjustment step is substantially a feedback implemented preferably following the start of the distribution step.

The adjustment step comprises at least a monitoring sub-step, at least a recognition sub-step, at least a determination sub-step, at least a verification sub-step and in some cases a correction sub-step. Preferably said sub-steps are reiterated and then repeated until reaching the final position of at least an object 10 and in particular the totality of the objects 10.

In the monitoring sub-step an image 40 is acquired. In this image one or more objects 10, due to the distribution step, may have changed its own position and/or orientation.

In the recognition sub-step one or more templates 41 are identified in the image 40 of the monitoring step. In particular, for each object at least partially visible in the image 10 the identification of the template 41 is performed.

In the determination sub-step an actual trajectory of one or more templates 41 is determined and then of one or more objects 10, that is the displacement actually performed by each object 10. In particular, the actual trajectory is determined depending upon the position of the template 40 in the image 40 acquired in the monitoring step and of the position of the template 40 determined the actual trajectory. Preferably the actual trajectory is determined depending upon the difference between said positions.

It is highlighted that since the adjustment step is performed parallelly to the distribution step, the difference between the positions of the templates 41 in the two images is minimum (that is they are at least partially overlapped) by allowing then to associate correctly the templates 41 in the various images.

Then, in the verification sub-step, the correspondence between the actual trajectory and the displacement segment 4a is preferably verified. A deviation is then determined between the actual trajectory and the displacement segment 4a that is the deviation of the actual trajectory from the displacement segment 4a.

If the deviation is greater than an acceptability threshold, in the verification sub-step a correction factor is defined and then in the correction sub-step a variation actuating the moving means 3 is commanded so as to correct said deviation. Consequently, the distribution step continues with an alteration in the actuation of the means 3. Said correction factor can define a modification in the moving axis 3a and/or the intensity of the displacement force.

If the deviation is not greater than an acceptability threshold, in the verification sub-step a correction factor is not defined and then there is no correction sub-step. Consequently, the distribution step continues without altering the actuation of the means 3.

The sub-steps are implemented, preferably in the order, until the control distance and the displacement segment 4a correspond. This means that the reiteration is performed until the motion of the object 10 actually brought it in the position in which its template 41 is in final position.

The adjustment step and then the distribution step are implemented until the control distance and the displacement segment 4a correspond. This means that the reiteration is performed until the motion of the object 10 actually brought it in the position in which its template 41 is in final position.

In order to improve the features of the process, a learning step can be provided.

The process, then, comprises a learning step of the neural network and thus of the the computer 5.

The learning step, preferably, precedes the distribution step.

Then, the learning step comprises at least a recording sub-step.

The recording sub-step is preferably implemented on the storage medium according to the invention.

In the recording sub-step, advantageously, at least two-dimensional digital models of each object 10 are recorded on the computer 5. Then, the objects 10 are modelled to allow the recognition thereof, following the acquisition step, starting from the template 41.

Once recognized the modelled object 10, it is possible to associate with the template 41 gripping portions 41a corresponding to gripping zones 10a, in case previously already modelled and recorded on the computer 5.

Then, the learning step comprises at least a sub-step for calibrating the moving means 3.

Preferably, the calibration sub-step is implemented for subsequent iterations. Then, the calibration sub-step is implemented by reiterating a plurality of subsequent actions.

Preferably, the actions comprise at least an actuation step, a recovery step, a calculation step and an association step.

In the actuation step, preferably, the moving means 3 are commanded by the computer 5, to impart a displacement force on the support 2. As already mentioned in the commanding sub-step, it is not required that the force is oriented entirely along the moving axis 3a, but it is sufficient that at least a component is aligned with the moving axis 3a. The displacement force, preferably, implements the displacement of at least an object 10 along the moving axis 3a.

In the recovery step an image 40 is acquired.

In the calculation step the distance travelled by the object 10 along the moving axis 3a is determined.

Then, in the association step preferably the displacement force is associated to the travelled distance.

The steps are realized, preferably in the order, until at least two subsequent associations correspond. This means that the reiteration is performed until a total feedback between force and displacement has been found, that is until the neural network has learned the real effects and consequences, in terms of displacement, of the actuation of the moving means 3. The computer 5 thus knows a correspondence between displacement and actuation of the moving means 3. Such information is stored in the computer 5 which then knows such feedback between force and displacement. It is exploited in the analysis and adjustment steps in order to determine how actuating the means 3 to move the object 10 as much as coherently as possible with the the displacement segment 4a.

The process for repositioning a group of objects arranged in bulk on a stand according to the invention achieves important advantages.

In fact, the process for repositioning a group of objects arranged in bulk on a stand allows to increase the rapidity in picking up an object of the group through a picking device, considering that the process is capable of placing the objects with single rapid motions under the conditions of being picked-up.

Moreover, the process for repositioning a group of objects arranged in bulk on a stand is highly performing and reduces the number of actions required to complete the procedure.

In fact, the fact of being able to provide where the objects will be positioned allows to reduce the number of motions of the support 2, by allowing to pick up objects and unravel them much more rapidly.

The invention may be subject to variants within the scope of the inventive concept defined by the claims.

Within such scope, all details can be replaced by equivalent elements and the materials, shapes and sizes can be any.

## Claims

1. A process for repositioning a group of objects arranged in bulk on a stand, implemented by computer e comprising:
- a repositioning system (1) including:
- a plurality of objects (10) each one defining a shape and/or gripping surface and/or material such as to determine one or more stable gripping zones (10a) on said object (10) suitable for stably gripping by a picking device (100),
- a support (2) developing along a support plane (2a) on which said objects (10) are distributed in bulk at least partially mutually overlapping,
- moving means (3) configured to move, on command, said support (2) along at least one moving axis (3a) parallel to said support plane (2a),
- acquisition means (4) configured to acquire, on command, an at least two-dimensional image (40) of said objects (10) on said support (2) such that at least two-dimensional templates (4) of said objects (10), visible by means of said acquisition means (4) on said support plane (2a) are identified, including gripping portions (41a) corresponding to said gripping zones (10a),
- a computer (5) operatively connected to said acquisition means (4) and said moving means (3) and configured to exchange data with said acquisition means (4) and said moving means (3) such that it can control said acquisition means (4) and said moving means (3);
further comprising:
- acquiring said image (40) by said acquisition means (4);
and **characterized by** including
- an acquisition step in which for at least one said template (41) interfering with at least one other said template (41) a displacement segment (4a) is determined by said computer (5), along which said template (41) is to be moved parallel to said support plane (2a) to bring said template (41) from an initial position of interference between said templates (41) to a final position of non-interference between said templates (41) in which said gripping portions (41a) of said template (41) are spaced from said other template (41) by a predetermined distance, and
- a distribution step in which said moving means (3) is controlled by said computer (5) to align said moving axis (3a) with said displacement segment (4a) and to move said support (2) along said moving axis (3a) to displace said object (10) along said moving axis (3a) by a distance equal to said displacement object (4a) in such a way that said relative template (41) goes from said initial position to said final position thus neatly distributing at least part of said objects (10):.

2. The process according to claim 1, wherein said computer (5) implements a neural network and said process further comprises a learning step of said neural network, preceding said acquisition step and said distribution step, including:
- recording on said computer (5) at least two-dimensional digital models of each said object (10) in such a manner as to enable recognition, following said acquisition step, of said object (10) from said template (41) and associating with said template (41) gripping portions (41a) corresponding to said gripping zones (10a),
- calibrating said moving means (3) by reiterating:
- controlling by said computer (5) said moving means (3) to impart a displacement force on said support (2) realizing a displacement of said object (10) along said moving axis (3a),
- acquiring said image (40) by said acquisition means (4),
- determining a distance travelled by said object (10) along said moving axis (3a),
- associating said displacement force with said travelled distance;
until at least two subsequent associations correspond.

3. The process according to the preceding claim, comprising a step of adjusting said moving means (3) by reiterating:
- controlling by said computer (5) said moving means (3) to impart said displacement force on said support (2) to implement a displacement of said object (10) along said moving axis (3a) equal to said displacement segment (4a),
- acquiring said image (40) by said acquisition means (4),
- determining an actual trajectory of said object (10),
- verifying the correspondence between said actual trajectory and said displacement segment (4a);
until said actual trajectory and said displacement segment (4a) are matched.

4. The process according to any one of the preceding claims, wherein said acquisition means (4) faces said support plane (2a) such that said images (40) are detected parallel to said support plane (2a) and said templates (41) are defined by said acquisition means (4) as least as projections onto said support plane (2a) of said visible objects (10).

5. The process according to any one of the preceding claims, wherein said support (2) defines along said support plane (2a) at least one accumulation zone (20) in which said objects (10) are arranged in bulk in said initial position and a distinct pick-up zone (21) of said objects (10) in which one or more of said objects (10) are in said final position and said moving means (3) is configured to move exclusively said accumulation zone (20) in such a manner as to keep said pick-up zone (21) stationary.

6. A repositioning system (1) comprising means for implementing a process according to any one of the preceding claims.

7. The system (1) according to the preceding claim, wherein said acquisition means (4) comprises at least a camera.

8. An object picking apparatus (101) including a system (1) according to any one of claims 6-7 and a picking device (100) including a robot comprising at least one movable picking end configured to interact with one or more of said gripping zones (10a) of said object (10).

9. A computer program comprising instructions which, when said program is executed by said computer, enable said computer to perform a process according to any one of claims 1-5.

10. A computer-readable storage medium comprising instructions which, when executed by said computer, enable said computer to perform a process according to any one of claims 1-5.
